# EUROPEAN PATENT APPLICATION

(11) **EP 2 152 013 A1**
(43) Date of publication of application: **10.02.2010**
(21) Application number: 08764745.9
(22) Date of filing: 27.05.2008
(51) Int. Cl.: H04Q 1/00

(54) **BASE STATION, RADIO COMMUNICATION SYSTEM, BAND CONTROL METHOD**

(30) Priority: 31.05.2007 JP 2007144487
(71) Applicant: Nec Corporation, Tokyo 108-8001 (JP)
(72) Inventor: NIKI, Takeo, Tokyo 108-8001 (JP)
(74) Representative: MacDougall, Alan John Shaw
(86) International application number: PCT/JP2008/059717
(87) International publication number: WO 2008/149726

(57) **Abstract**

Burst intervals for transmitting and receiving user data of each mobile station provided in downlink subframes and uplink subframes prescribed by orthogonal frequency division multiple access are divided in the frequency axis direction into a plurality of allocated regions that correspond to the number of sectors; allocated regions for transmitting and receiving user data of each mobile station are allocated to allocated regions that correspond to the sector in which the mobile station is located; and when the allocated bandwidth required for transmission of user data in a sector surpasses the communication bandwidth of the allocated region, an allocated region is allocated that corresponds to a sector other than that sector.

## Description

### TECHNICAL FIELD

The present invention relates to a base station and wireless communication system in which the orthogonal frequency division multiple access (OFDMA) scheme is adopted and to a bandwidth control method used in the base station.

### BACKGROUND ART

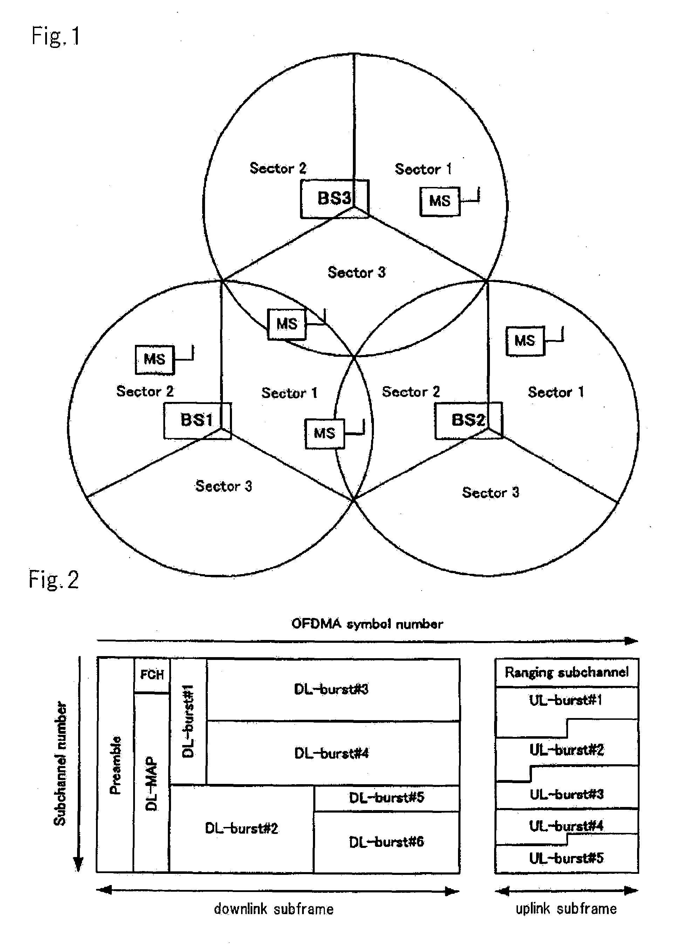

FIG. 1 is a schematic view showing an example of the cell arrangement in a wireless communication system.

As shown in FIG. 1, the wireless communication system is of a configuration provided with a plurality of base stations BS (BS1, BS2, BS3 in the example shown in FIG. 1). Base stations BS1-BS3 shown in FIG. 1 further partition and control the cells that each base station controls into three sectors (Sector 1, Sector 2, and Sector 3). A mobile station MS performs wireless communication with the base station BS that controls the sector in which that mobile station is located of Sectors 1-3 that are controlled by each base station BS.

In the configuration shown in FIG. 1, when the frequency reuse rate of the wireless communication system is "3" (Reuse 3), base stations BS1, BS2, and BS3 normally use frequency regions that differ from that of adjacent sectors to perform wireless communication with mobile stations MS, and as a result, inter-sector interference does not present a problem.

However, when the frequency reuse rate of the wireless communication system is "1" (Reuse 1), inter-sector interference occurs at the sector boundaries because the same frequency region is used in all sectors.

FIG. 2 is a schematic view showing an example of the configuration of an OFDMA frame that is prescribed in, for example, IEEE 802.16e-2005.

The vertical axis of FIG. 2 is the frequency axis and the horizontal axis is the time axis. A plurality of subcarriers arranged in groups (subchannels) are arranged in the direction of the frequency axis, and OFDMA symbols are arranged in the direction of the time axis.

Subchannels are logic channels composed of a plurality of physical subcarriers, no particular restrictions being placed on which subcarriers are bundled to make up one subchannel. Normally, subchannels are realized by bundling subcarriers that are randomly arranged to reduce interference between subchannels.

In the IEEE 802.16e-2005 standards, a plurality of rules are prescribed regarding the subcarrier arrangement method in an OFDMA frame. The following explanation regards a case of employing, of these rules, PUSC (Partial Usage of Subchannels) instead of FUSC (Full Usage of Subchannels). However, the present invention is not limited to the PUSC mode.

As shown in FIG. 2, a downlink subframe is made up from a preamble, an FCH (Frame Control Header), a DL-MAP (Downlink Map), and Downlink Burst (DL-burst) intervals (DL-burst #1, DL-burst #2, ..., DL-burst #6). Although not shown in FIG. 2, uplink maps (UL-MAP) are transmitted by using, for example, a portion of the DL-MAP regions or downlink burst intervals (DL-burst #1) of the downlink subframe.

The preamble is fixed data determined in advance that is used in, for example, detecting the head of a frame or measuring reception quality.

FCH is information for reporting to each mobile station MS the modulation method and coding method that are used in these MAP regions in order that the succeeding DL-MAP and UL-MAP be read correctly.

The downlink burst interval is the region of the user data of each mobile station MS address that is transmitted in the down direction (the direction from a BS to an MS). In the example shown in FIG. 2, separate user data are allocated to each of DL-burst #1, DL-burst #2, ..., DL-burst #6. The downlink burst intervals are not limited to the form of DL-burst #1, DL-burst #2, ..., DL-burst #6 shown in FIG. 2, the form being open to modification as appropriate according to, for example, the number of mobile stations MS engaged in communication, the priority for each mobile station MS, and the transmission rate requested by each mobile station MS.

DL-MAP is information designating the position (frequency region and time in a downlink subframe) of user data for each mobile station MS in a downlink burst interval that is transmitted in the downward direction.

UL-MAP is information designating the position (the frequency region and time in an uplink subframe) of user data for each mobile station MS in an uplink burst interval that is transmitted in the upward direction (from an MS to a BS).

Mobile stations MS transmit user data to and receive user data from base stations BS using the frequency region (subchannel) and time region (time slot) in OFDMA frames that are designated by DL-MAP and UL-MAP.

An uplink subframe is made up from a control channel and uplink burst (UL-burst) intervals (UL-burst #1, UL-burst #2, ..., UL-burst #5).

The control channel is a region for information used in control. For example, information is transmitted and received that is used in a Ranging process for synchronizing a base station BS and each mobile station MS.

Uplink burst intervals are regions of user data that are transmitted in the upward direction from each mobile station MS. In the example shown in FIG. 2, separate user data are allocated to each of UL-burst #1, UL-burst #2, ..., UL-burst #5.

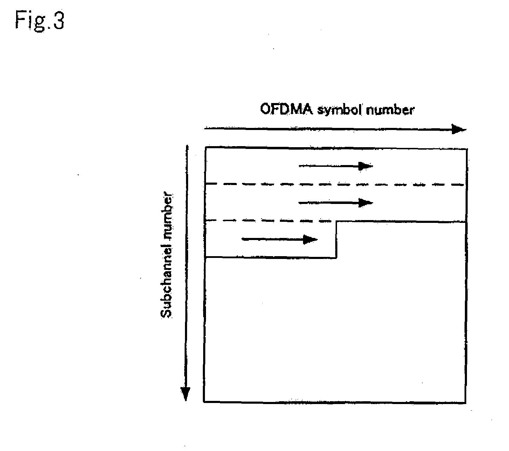

The burst intervals and control channel can be arranged at any position in an OFDMA frame. However, according to the IEEE 802.16e-2005 standards, downlink burst intervals must be set in rectangular shape. In uplink burst intervals, user data must all be sequentially arranged in the time axis direction for each subchannel as shown by the arrows in FIG. 3.

In the OFDMA scheme, however, a plurality of physical subcarriers are randomly allocated to a subchannel (hereinbelow referred to as a random conversion rule) as described hereinabove. Here, the physical subcarriers that are allocated to each subchannel are determined according to the cell number, and the same physical subcarriers are allocated to each subchannel in each sector. In contrast, the same physical subcarriers are not allocated to each subchannel in each base station BS. These random conversion rules can be altered from any symbol in an OFDMA frame by using a DL zone switch IE that is defined in the IEEE 802.16e-2005 standards. This is referred to as Zone switching.

In a wireless communication system that employs the OFDMA scheme, inter-sector interference occurs when the same wireless channel (subchannel) is used in each sector. Methods for reducing this type of inter-sector interference are proposed in, for example, Japanese Laid-Open Patent Application No. 2004-537875 and Japanese Laid-Open Patent Application No. 2006-515141.

In Japanese Laid-Open Patent Application No.2004-537875 and Japanese Laid-Open Patent Application No. 2006-515141, inter-sector interference is reduced by dividing a downlink subframe in the time axis direction, allocating the divided blocks to each sector, and then using the blocks that have been allocated to each sector to transmit and receive user data.

Alternatively, segmenting is defined in the IEEE 802.16e-2005 standards as a method for reducing inter-sector interference. Segmenting is a method of dividing, for example, one OFDMA frame into three parts in the frequency axis direction according to the number of sectors and then using different frequency regions in the three sectors.

However, implementation of the method disclosed in the above-described Japanese Laid-Open Patent Application No. 2004-537875 and Japanese Laid-Open Patent Application No. 2006-515141 or the segmenting prescribed in IEEE 802.16e-2005 results in limiting the communication bandwidth that can be used in each sector to just 1/3 of the total communication band that can be used in a cell. In particular, because a downlink subframe is provided with various types of overhead such as the preamble, FCH, DL-MAP and UL-MAP, the downlink burst intervals that can be used for the transmission of user data is reduced to less than 1/3 of the entire communication bandwidth that can be used in a cell.

### SUMMARY

It is an object of the present invention to provide a base station, a wireless communication system, and a bandwidth control method that can limit interference with other sectors to a minimum while ensuring communication capacity even when using the same wireless channels in a plurality of base stations BS in a wireless communication system in which OFDMA is applied.

In an aspect of the present invention for achieving the above-described object, burst intervals for transmitting and receiving user data of each mobile station provided in downlink subframes and uplink subframes prescribed by orthogonal frequency division multiple access are divided in the frequency axis direction into a plurality of allocated regions of a number that accords with the number of sectors; allocated regions for transmitting and receiving user data of each mobile station are allocated to the allocated regions that correspond to the sector in which the mobile station is located; and when the allocated bandwidth required for the transmission of user data in a sector surpasses the communication bandwidth of the allocated region, an allocated region that corresponds to a sector other than that sector is allocated.

Adopting this method in a case in which a cell is made up from, for example, three sectors realizes the same effect as a case of implementing the segmentation prescribed by IEEE 802.16e-2005 until the communication bandwidth required for transmitting user data in each sector is 1/3 of the total communication bandwidth that can be used in the cell.

Typically, the continuous generation of user data that occupies the entire communication bandwidth of a sector rarely occurs, and adoption of the present invention therefore can be fully expected to achieve the effect of reducing inter-sector interference during operation.

### BRIEF DESCRIPTION OF THE DRAWINGS

[Fig. 1]
   FIG. 1 is a schematic view showing an example of the cell arrangement in a wireless communication system.
[Fig. 2]
   FIG. 2 is a schematic view showing an example of the configuration of an OFDMA frame that is prescribed by the IEEE 802.16e-2005 standards.
[Fig. 3]
   FIG. 3 is a schematic view showing the rules for arranging user data that correspond to each uplink burst interval shown in FIG. 2.
[Fig. 4]

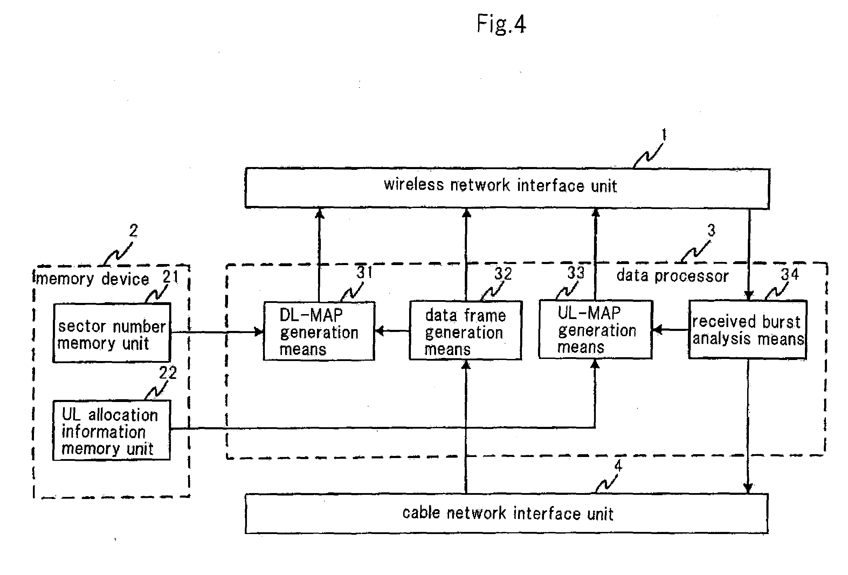

   FIG. 4 is a block diagram showing the configuration of the first exemplary embodiment of a base station that is provided in the wireless communication system of the present invention.
[Fig. 5]

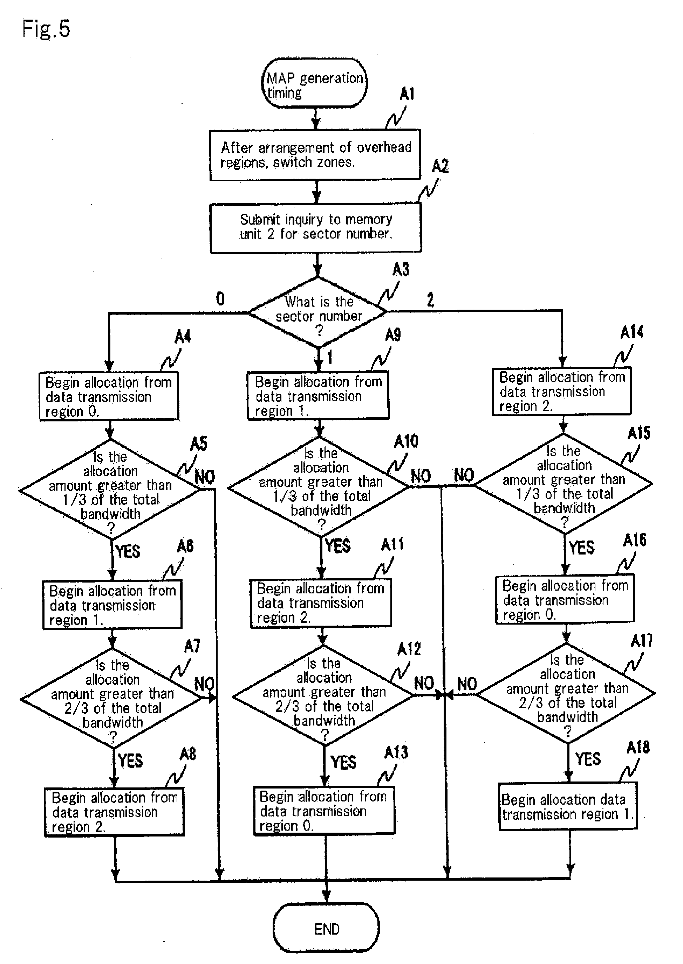

   FIG. 5 is a flow chart showing the procedures of the bandwidth control method of the present invention realized by the DL-MAP generation means shown in FIG. 4.
[Fig. 6]

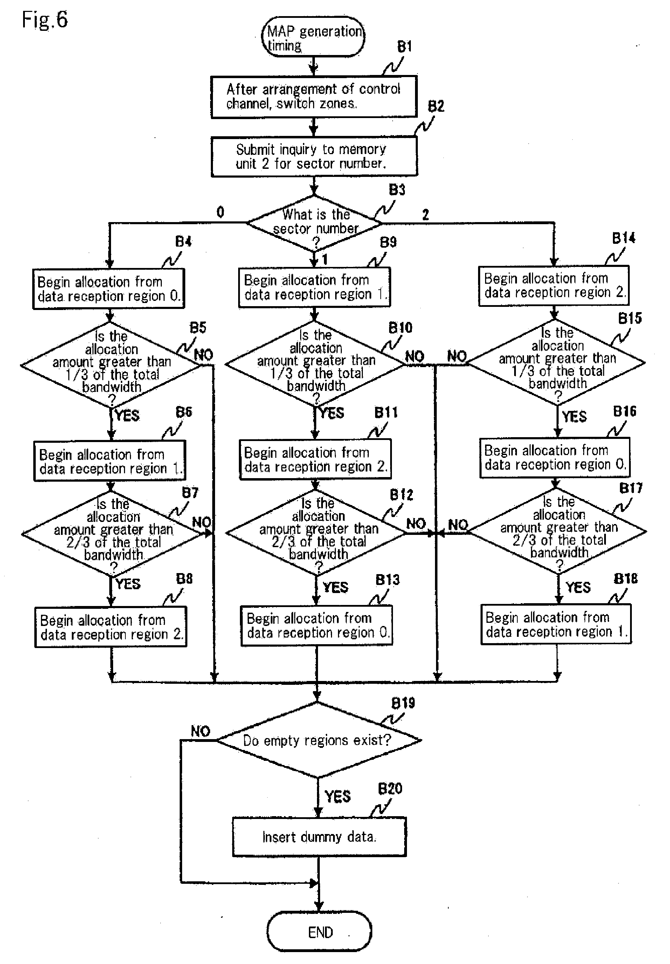

   FIG. 6 is a flow chart showing the procedure of the bandwidth control method of the present invention realized by the UL-MAP generation means shown in FIG. 4.
[Fig. 7]

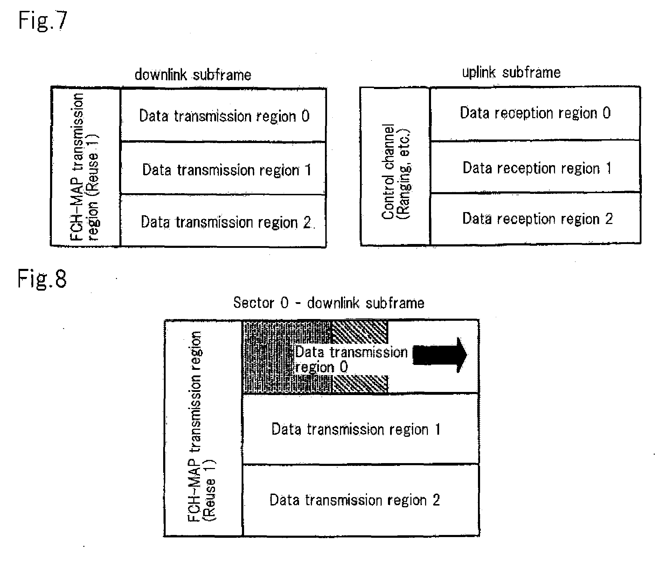

   FIG. 7 is a schematic view showing an example of the configuration of a downlink subframe and uplink subframe used in the wireless communication system of the first exemplary embodiment.
[Fig. 8]
   FIG. 8 is a schematic view showing the allocation of regions used in the transmission of user data in data transmission region 0 shown in FIG. 7.
[Fig. 9]

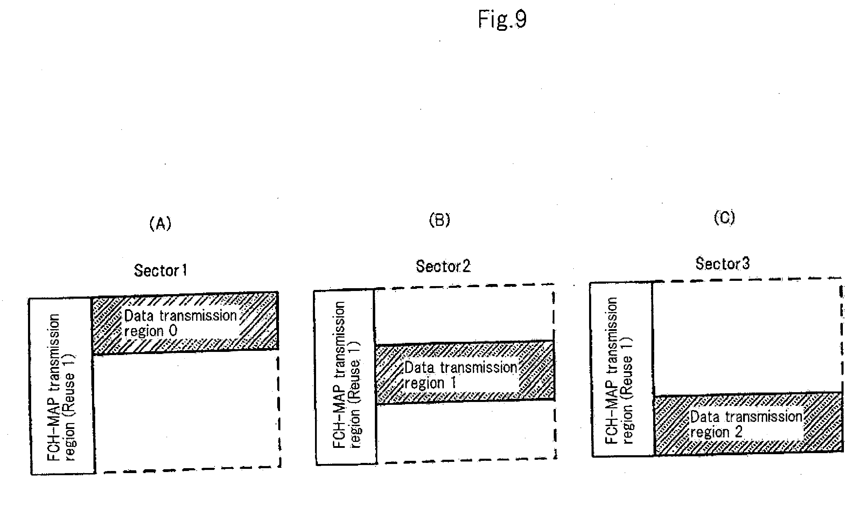

   FIG. 9 is a schematic view showing the regions used in the transmission of user data that are allocated to each sector when the bandwidth required for transmission of user data in each sector is no greater than 1/3 of the total communication bandwidth that can be used in a cell.
[Fig. 10]

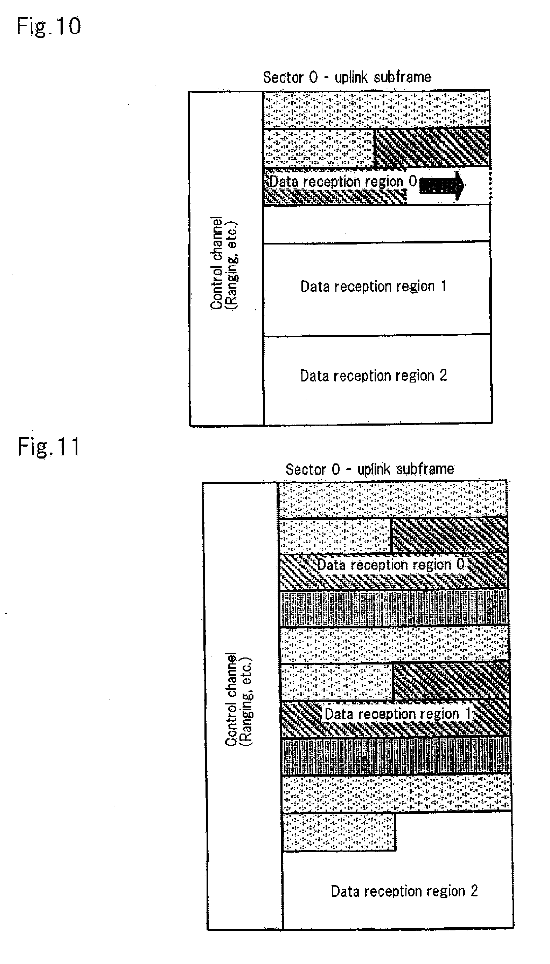

   FIG. 10 is a schematic showing the allocation of regions used in the transmission of user data in data reception region 0 shown in FIG. 7.
[Fig. 11]
   FIG. 11 is a schematic view showing the allocation of regions used in the transmission of user data in data reception regions 0, 1, and 2 shown in FIG. 7.
[Fig. 12]

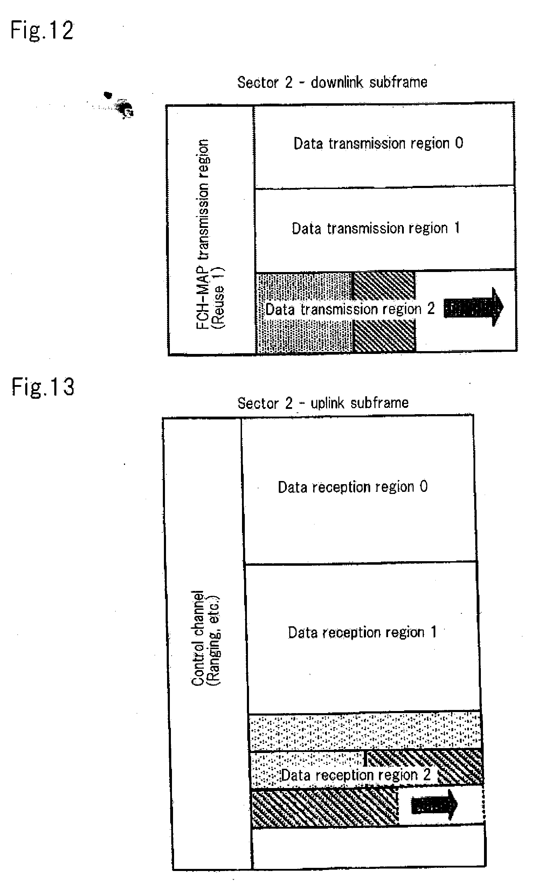

   FIG. 12 is a schematic view showing the allocation of regions used in the transmission of user data in data transmission region 2 shown in FIG. 7.
[Fig. 13]
   FIG. 13 is a schematic view showing the allocation of regions used in the transmission of user data in data reception region 2 shown in FIG. 7.
[Fig. 14]

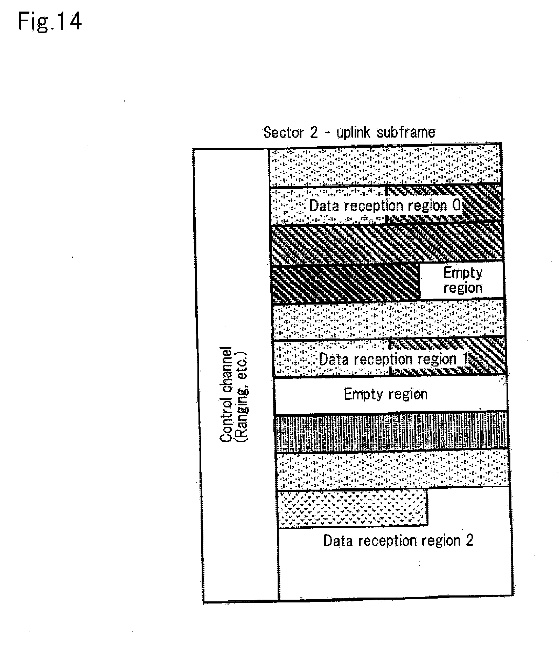

   FIG. 14 is a schematic view showing the allocation of regions used in the transmission of user data in data reception regions 0, 1, and 2 shown in FIG. 7.
[Fig. 15]

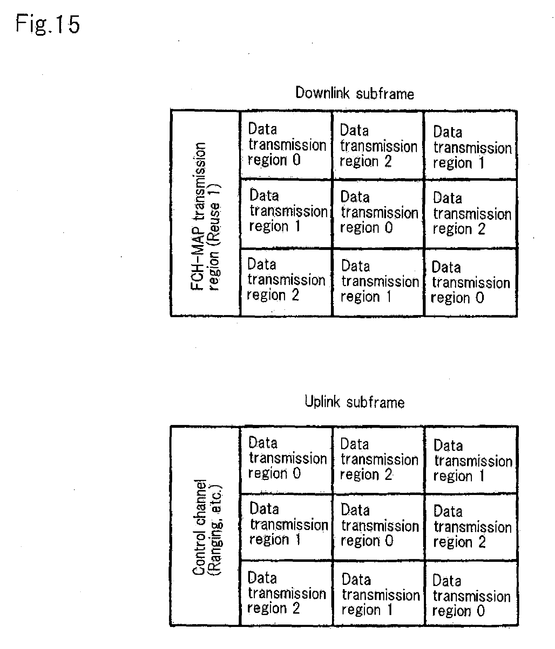

   FIG. 15 is a schematic view showing an example of the configuration of a downlink subframe and uplink subframe used in the wireless communication system of the second exemplary embodiment.

### EXEMPLARY EMBODIMENT

Exemplary embodiments of the present invention are next described with reference to the accompanying figures.

### (First exemplary embodiment)

FIG. 4 is a block diagram showing the configuration of the first exemplary embodiment of a base station that is provided in the wireless communication system of the present invention.

As shown in FIG. 4, base station BS of the first exemplary embodiment is equipped with wireless network interface unit 1, memory device 2, data processor 3, and cable network interface unit 4.

Wireless network interface unit 1 is realized by an OFDMA module that conforms with the IEEE 802.16e-2005 standard.

ROM (Read Only Memory) or RAM (Random Access Memory) is used in memory device 2.

Data processor 3 can be realized by a construction similar to a typical computer system, and, for example, may be equipped with: a CPU (Central Processing Unit) for executing processing in accordance with a program; a main memory device for temporarily holding data required in the processing of the CPU; a recording medium in which are stored programs for causing the CPU to execute the bandwidth control method of the present invention that is described hereinbelow, and a memory interface unit that is the interface with the main memory device and recording medium.

Cable network interface unit 4 is realized by, for example, a LAN interface circuit that conforms to 10BASE-T or 100BASE-TX. Cable network interface unit 4 is connected with a host network (not shown in the figure) and both transmits user data that have been received from mobile station MS to the host network and receives user data addressed to each mobile station MS that have been transmitted from the host network.

Memory device 2 is equipped with sector number memory unit 21 and UL allocation information memory unit 22.

Sector number memory unit 21 holds the sector numbers that are appended to the plurality of sectors managed by that base station.

UL allocation information memory unit 22 holds UL allocation information that indicates the bandwidth allocated to each mobile station MS for an uplink subframe. The UL allocation information is adjusted and determined in advance by data processor 3 with each mobile station MS based on requests for allocation of bandwidth for each mobile station MS (UL bandwidth allocation requests) for uplink subframes that are received from each mobile station MS.

Data processor 3 is equipped with DL-MAP generation means 31, data frame generation means 32, UL-MAP generation means 33, and received burst analysis means 34.

Received burst analysis means 34 analyzes the request for allocation of bandwidth for each mobile station MS (UL bandwidth allocation request) for uplink subframes that are received from each mobile station MS and generates dummy data (to be described) as necessary.

Data frame generation means 32 both temporarily holds user data for each mobile station MS that are received from the host network and manages the scheduled data amount that is transmitted to each mobile station MS.

DL-MAP generation means 31 fetches from sector number memory unit 21 of memory device 2 the sector number of a sector for which DL-MAP is to be generated and fetches from data frame generation means 32 the scheduled data amount of transmission for each mobile station MS. DL-MAP generation means 31 then generates a DL-MAP for designating the burst intervals that are allocated to each mobile station MS in the sector that corresponds to the sector number.

UL-MAP generation means 33 fetches from UL allocation information memory unit 22 of memory device 2 the UL allocation information for each mobile station MS that is required for generation of a UL-MAP, and generates a UL-MAP for designating the burst intervals that are allocated to each mobile station MS in the sector that corresponds to the sector number.

Wireless network interface unit 1 both transmits the DL-MAP that was generated by DL-MAP generation means 31 and the UL-MAP that was generated by UL-MAP generation means 33 and transmits and receives user data that are fetched from data frame generation means 32 based on the DL-MAP and UL-MAP.

FIG. 7 is a schematic view showing an example of the configuration of a downlink subframe and uplink subframe that are used in the wireless communication system of the first exemplary embodiment.

As shown in FIG. 7, the downlink subframe used in the wireless communication system of the first exemplary embodiment is provided with: overhead region in which are arranged the preamble, FCH, and DL-MAP that are transmitted in common to all mobile stations MS in a cell (frequency reuse rate = 1 (Reuse 1)); and data transmission regions 0, 1, 2, ... that are used in the transmission of user data and in which the entire communication bandwidth that can be used in a cell has been divided according to the number of sectors.

An uplink subframe is provided with: a control channel, and data reception regions 0, 1, 2, ... in which the entire communication bandwidth that can be used in a cell is divided according to the number of sectors for receiving user data that are transmitted from each mobile station MS. The data transmission regions and data reception regions correspond to the above-described allocated regions.

The operations of DL-MAP generation means 31 are next described using FIG. 5.

DL-MAP generation means 31, upon detecting the generation timing of a DL-MAP according to instructions from data processor 3, uses DL zone switch IE to perform zone switching of the downlink burst intervals after the overhead regions have been arranged such that the same random conversion rule is used in all sectors that include other base stations BS (Step A1).

DL-MAP generation means 31 then submits an inquiry to memory device 2 for the sector number for which a DL-MAP is to be generated (Step A2). Upon acquiring the sector number from sector number memory unit 21, DL-MAP generation means 31 checks the number (Step A3) and then, according to the sector number, proceeds to one of the processes of Steps A4-A8, Steps A9-A13, or Steps A14-18 shown in FIG. 5.

When sector number 0 is detected in the process of Step A3, DL-MAP generation means 31 allocates the regions that are to be used in the transmission of user data to each of mobile stations MS in the sector that corresponds to the sector number to data transmission region 0 (Step A4). Here, when the bandwidth (allocated amount) that is required for the transmission of user data in the sector exceeds 1/3 of the entire communication bandwidth that can be used in the cell (when the determination result of Step A5 is YES), DL-MAP generation means 31 further allocates the regions that are to be used in the transmission of the remaining user data to data transmission region 1 in addition to data transmission region 0 (Step A6). Still further, when the bandwidth (allocated amount) that is required for the transmission of user data in the sector surpasses 2/3 of the entire communication bandwidth that can be used in the cell (when the determination result of Step A7 is YES), DL-MAP generation means 31 further allocates the regions that are to be used in the transmission of the remaining user data to data transmission region 2 in addition to data transmission regions 0 and 1 (Step A8).

When sector number 1 is detected in Step A3, DL-MAP generation means 31 allocates the regions that are to be used in the transmission of user data to each mobile station MS in the sector that corresponds to the sector number to data transmission region 1 (Step A9). When the bandwidth (allocated amount) that is here required for the transmission of user data in the sector exceeds 1/3 of the entire communication bandwidth that can be used in the cell (when the determination result of Step A10 is YES), DL-MAP generation means 31 allocate the region that is to be used for the transmission of the remaining user data to data transmission region 2 in addition to data transmission region 1 (Step A11). Still further, when the bandwidth (allocated amount) required for the transmission of user data in the sector exceeds 2/3 of the entire communication bandwidth that can be used in the cell (when the determination result of Step A12 is YES), DL-MAP generation means 31 also allocates the regions that are to be used in the transmission of the remaining user data to data transmission region 0 in addition to data transmission regions 1 and 2 (Step A13).

Similarly, when sector number 2 is detected in Step A3, DL-MAP generation means 31 allocates the regions that are to be used in the transmission of user data to each mobile station MS in the sector that corresponds to the sector number to data transmission region 2 (Step A14). When the bandwidth (allocated amount) that is necessary for the transmission of user data in that sector exceeds 1/3 of the entire communication bandwidth that can be used in that cell (when the determination result of Step A15 is YES), DL-MAP generation means 31 allocates the regions that are to be used in the transmission of the remaining user data to data transmission region 0 in addition to data transmission region 2 (Step A16). Still further, when the bandwidth (allocated amount) that is required for the transmission of user data in that sector exceeds 2/3 of the entire communication bandwidth that can be used in that cell (when the determination result of Step A17 is YES), DL-MAP generation means 31 further allocates the regions that are to be used in the transmission of the remaining user data to data transmission region 1 in addition to data transmission regions 2 and 0 (Step A18).

The operations of UL-MAP generation means 33 are next described using FIG. 6.

Following the arrangement of the control channel, UL-MAP generation means 33 uses UL zone switch IE to carry out zone switching of burst intervals such that the same random conversion rule is used in all sectors that include other base stations BS (Step B1).

UL-MAP generation means 33 next submits an inquiry to memory device 2 for the sector number for which a UL-MAP is to be generated (Step B2). UL-MAP generation means 33, upon acquiring the sector number from sector number memory unit 21, checks the number (Step B3), and then proceeds to the processes of one of Steps B4-B8, Steps B9-B13, or Steps B14-B18 shown in FIG. 6 according to the sector number.

When sector number 0 is detected in the process of Step B3, UL-MAP generation means 33 allocates the regions that are to be used in the transmission of user data from each mobile station MS in the sector that corresponds to the sector number to data reception region 0 (Step B4). When the bandwidth (allocated amount) that is required for the transmission of user data in the sector surpasses 1/3 of the entire communication bandwidth that can be used in the cell (when the determination result of Step B5 is YES), UL-MAP generation means 33 further allocates the regions that are to be used in the transmission of the remaining user data to data reception region 1 in addition to data reception region 0 (Step B6). Still further, when the bandwidth (allocated amount) that is required for the transmission of user data in that sector surpasses 2/3 of the entire communication bandwidth that can be used in the cell (when the determination result of Step B7 is YES), UL-MAP generation means 33 further allocates the regions that are to be used in the transmission of the remaining user data to data reception region 2 in addition to data reception regions 0 and 1 (Step B8).

When sector number 1 is detected in the process of Step B3, UL-MAP generation means 33 allocates the regions that are to be used in the transmission of user data from each mobile station MS in the sector that corresponds to the sector number to data reception region 1 (Step B9). When the bandwidth (allocated amount) that is required for the transmission of user data in the sector surpasses 1/3 of the entire communication bandwidth that can be used in the cell (when the determination result in Step B10 is YES), UL-MAP generation means 33 further allocates the regions that are to be used in the transmission of the remaining user data to data reception region 2 in addition to data reception region 1 (Step B11). Still further, when the bandwidth (allocated amount) that is required for the transmission of user data in that sector surpasses 2/3 of the entire communication bandwidth that can be used in that cell (when the determination result of Step B12 is YES), UL-MAP generation means 33 further allocates the regions that are to be used in the transmission of the remaining user data to data reception region 0 in addition to data reception regions 1 and 2 (Step B13).

Similarly, when sector number 2 is detected in the process of Step B3, UL-MAP generation means 33 allocates the regions that are to be used in the transmission of user data from each mobile station MS in the sector that corresponds to the sector number to data reception region 2 (Step B14). When the bandwidth (allocated amount) that is required for transmission of user data in the sector surpasses 1/3 of the total communication bandwidth that can be used in the cell (when the determination result of Step B15 is YES), UL-MAP generation means 33 allocates the regions that are to be used in the transmission of the remaining user data to data reception region 0 in addition to data reception region 2 (Step B16). When the bandwidth (allocated amount) that is required for the transmission of user data in the sector surpasses 2/3 of the total communication bandwidth that can be used in the cell (when the determination result of Step B17 is YES), UL-MAP generation means 33 further allocates the regions that are to be used in the transmission of the remaining user data to data reception region 1 in addition to data reception regions 2 and 0 (Step B 18).

UL-MAP generation means 33, upon completion of the allocation of the regions that are to be used in the transmission of user data of all mobile stations MS in each sector, checks whether empty regions exist in each data reception region (Step B 19). When an empty region exists in the data reception regions, UL-MAP generation means 33 inserts dummy data that have been determined in advance into the region (Step B20).

The operations of DL-MAP generation means 31 and UL-MAP generation means 33 of the present exemplary embodiment are next described more specifically taking as an example the case of sector numbers 0 and 2.

DL-MAP generation means 31, upon fetching sector number 0 from sector number memory unit 21, sequentially allocates the regions that are to be used in the transmission of user data of each mobile station MS in the sector that corresponds to the sector number from the head (left side of the figure) of data transmission region 0 as shown in FIG. 8.

When the bandwidth required for the transmission of the user data in the sector surpasses 1/3 of the total communication bandwidth that can be used in the cell, DL-MAP generation means 31 sequentially allocates regions that are to be used in the transmission of the remaining user data from the head (the left side of the figure) of data transmission region 1.

When the bandwidth required for the transmission of user data in the sector further surpasses 2/3 of the total communication bandwidth that can be used in the cell, DL-MAP generation means 31 sequentially allocates regions that are to be used in the transmission of the remaining user data from the head (the left side of the figure) of data transmission region 2.

On the other hand, upon acquiring sector number 0 from sector number memory unit 21, UL-MAP generation means 33 sequentially allocates regions to be used in the transmission of user data from each mobile station MS in the sector that corresponds to the sector number from the head (left side of the figure) of data reception region 0 as shown in FIG. 10.

When the bandwidth required for the transmission of the user data in the sector exceeds 1/3 of the total communication bandwidth that can be used in the cell (when the determination result of Step B5 is YES), UL-MAP generation means 33 proceeds by sequentially allocating regions to be used in the transmission of the remaining user data from the head (left side of the figure) of data reception region 1.

When the bandwidth required for the transmission of the user data in the sector further surpasses 2/3 of the total communication bandwidth that can be used in the cell, UL-MAP generation means 33 proceeds by sequentially allocating regions to be used in the transmission of the remaining user data from the head (left side of the figure) of data reception region 2 as shown in FIG. 11.

Upon completion of the allocation of regions to be used in the transmission of user data of all mobile stations MS in each sector, UL-MAP generation means 33 checks whether empty regions exist in each data reception region. If an empty region exists in the data reception region, UL-MAP generation means 33 inserts dummy data that have been predetermined into the region. If an empty region does not exist in each data reception region, dummy data are not inserted.

DL-MAP generation means 31, upon acquiring sector number 2 from sector number memory unit 21, proceeds by sequentially allocating regions to be used in the transmission of user data of each mobile station MS in the sector that corresponds to the sector number from the head (left side of the figure) of data transmission region 2 as shown in FIG. 12.

When the bandwidth required for transmission of user data in the sector surpasses 1/3 of the total communication bandwidth that can be used in the cell, DL-MAP generation means 31 proceeds by sequentially allocating regions to be used in the transmission of the remaining user data from the head (the left side of the figure) of data transmission region 0.

When the bandwidth required for the transmission of user data in the sector further surpasses 2/3 of the total communication bandwidth that can be used in the cell, DL-MAP generation means 31 proceeds by sequentially allocating regions to be used in the transmission of the remaining user data from the head (left side of the figure) of data transmission region 1.

On the other hand, upon acquiring sector number 2 from sector number memory unit 21, UL-MAP generation means 33 proceeds by sequentially allocating regions to be used in the transmission of user data from each mobile station MS in the sector that corresponds to the sector number from the head (left side of the figure) of data reception region 2 as shown in FIG. 13.

When the bandwidth required for the transmission of user data in the sector here surpasses 1/3 of the total communication bandwidth that can be used in the cell, UL-MAP generation means 33 proceeds by sequentially allocating regions to be used in the transmission of the remaining user data from the head (left side of the figure) of data reception region 0.

When the bandwidth required for the transmission of user data in the sector further surpasses 2/3 of the total communication bandwidth that can be used in the cell, UL-MAP generation means 33 proceeds by sequentially allocating regions to be used in the transmission of the remaining user data from the head (left side of the figure) of data reception region 1 (Step B18).

Upon completion of the allocation of regions used in the transmission of user data of all mobile stations MS in each sector, UL-MAP generation means 33 checks whether empty regions exist in each data reception region (Step B 19). If an empty region exists in a data reception region, UL-MAP generation means 33 inserts dummy data that have been determined in advance into that region. For example, when empty regions exist in data reception region 0 and data reception region 1 as shown in FIG. 14, dummy data are inserted into the empty regions.

When the bandwidth that is used in the transmission of user data in each sector is not greater than 1/3 of the total communication bandwidth that can be used in the cell, the regions used in the transmission of user data that have been allocated in each sector are as shown in (A)-(C) of FIG. 9. In this case, even if the wireless communication system is operated in a non-segmented mode, inter-sector interference does not occur because a different frequency bandwidth (subchannel) is used in each sector, similar to a case of implementing the segmentation prescribed by IEEE 802.16e-2005.

Thus, according to the present exemplary embodiment, resistance to interference that is equivalent to a case of implementing the segmentation prescribed by IEEE 802.16e-2005 can be expected when operating a wireless communication system in a non-segmented mode until the bandwidth required for the transmission of user data in each sector in a downlink subframe reaches 1/3 of the total communication bandwidth that can be used in a cell.

In uplink subframes as well, the insertion of dummy data into empty regions that occur in data reception regions enables the arrangement of data in regions that do not permit arrangement in the IEEE 802.16e-2005 standards. As a result, the frequency regions used for the transmission of user data in an uplink burst interval can be switched according to the sector as with downlink subframes.

Accordingly, resistance to interference similar to a case of implementing the segmentation prescribed in IEEE 802.16e-2005 can be expected in uplink subframes that is similar to that in downlink subframes even when operating a wireless communication system in a non-segmented mode until the bandwidth required for the transmission of user data in each sector reaches 1/3 of the total communication bandwidth that can be used in a cell.

Still further, according to the present exemplary embodiment, even when the bandwidth required for the transmission of user data in each sector surpasses 1/3 of the total communication bandwidth that can be used in a cell, other data transmission regions or data reception regions can be used to transmit and receive user data, whereby, in contrast with the segmentation prescribed by IEEE 802.16e-2005, the communication bandwidth of each sector is not limited to just 1/3 of the total communication bandwidth that can be used in a cell.

### (Second exemplary embodiment)

The second exemplary embodiment of the present invention is next described.

In the wireless communication system of the first exemplary embodiment, an example was shown in which the burst intervals of an OFDMA frame were divided in the direction of the frequency axis according to the number of sectors. The wireless communication system of the second exemplary embodiment divides the burst intervals of an OFDMA frame both in the direction of the frequency axis according to the number of sectors and in the direction of the time axis according to the number of sectors. Still further, in the present exemplary embodiment, sectors that are allocated are switched at each symbol border of regions that are divided in the time axis direction. In other words, in the wireless communication system of the second exemplary embodiment, the burst intervals of an OFDMA frame are divided as shown in FIG. 15.

The configuration of the wireless communication system as well as the method of allocating the bandwidth required for transmission of user data to a plurality of data reception regions that are provided in an uplink subframe and a plurality of data transmission regions that are provided in a downlink subframe are the same as in the first exemplary embodiment, and explanation of these aspects is therefore omitted.

In the first exemplary embodiment, the occurrence of frequency-selective fading in a cell results in deterioration of the wireless communication environment of sectors that include the subchannel in which the fading occurs.

The wireless communication system of the present exemplary embodiment not only obtains the same effect as the first exemplary embodiment, but by switching on the time axis those sectors that are allocated to each frequency region as shown in FIG. 15, can also circumvent the problem of deterioration of the wireless communication environment of a portion of sectors resulting from the above-described frequency-selective fading.

Although an example in which each cell is divided into three sectors was shown in the first exemplary embodiment and second exemplary embodiment, the present invention is not limited to a form in which the number of cell partitions is three. In addition, the data transmission regions and data reception regions that are sequentially allocated in each sector can be freely set, and the data transmission regions and data reception regions that are sequentially allocated in each sector are not limited to the examples shown in the above-described first exemplary embodiment or second exemplary embodiment.

This application is based upon and claims the benefit of priority from Japanese patent application No. 2007-144487, filed on May 31, 2007, the disclosure of which is incorporated herein in its entirety by reference.

## Claims

1. A base station comprising:
a DL-MAP generation means for: dividing, in the frequency axis direction, downlink burst intervals for transmitting user data of each mobile station provided in downlink subframes prescribed by orthogonal frequency division multiple access into a plurality of data transmission regions that correspond in number to the number of sectors; allocating regions for transmitting user data of each said mobile station to a data transmission region corresponding to the sector in which the mobile station is located; and, when the bandwidth required for the transmission of user data in said sector surpasses the communication bandwidth of the data transmission region, allocating to a data transmission region that corresponds to a sector other than said sector; and
a UL-MAP generation means for: dividing, in the frequency axis direction, uplink burst intervals for transmitting user data of each mobile station provided in uplink subframes prescribed by orthogonal frequency division multiple access into a plurality of data reception regions that correspond in number to the number of sectors; allocating regions for transmitting user data of each said mobile station to a data reception region that corresponds to the sector in which the mobile station is located; and, when the bandwidth required for transmission of user data in said sector surpasses the communication bandwidth of that data reception region, allocating to a data reception region that corresponds to a sector other than said sector.

2. The base station according to claim 1, wherein:
said DL-MAP generation means further divides, in the time axis direction, said data transmission regions according to said number of sectors and switches sectors that are allocated at each symbol boundary of said regions that are divided in said time axis direction;
said UL-MAP generation means further divides, in the time axis direction, said data reception regions according to said number of sectors and switches sectors that are allocated at each symbol boundary of said regions that are divided in said time axis direction.

3. The base station according to claim 1 or 2, wherein said UL-MAP generation means, when an empty region exists in said data reception regions after the allocation of regions for transmitting user data of each said mobile station to said data reception regions, inserts dummy data that have been determined in advance into the empty region.

4. A wireless communication system comprising:
a base station according to any one of claims 1 to 3; and
a mobile station for carrying out wireless communication with said base station.

5. A bandwidth control method comprising steps of:
dividing, in the frequency axis direction, downlink burst intervals for transmitting user data of each mobile station provided in downlink subframes prescribed by orthogonal frequency division multiple access into a plurality of data transmission regions corresponding in number to the number of sectors;
allocating regions for transmitting user data of each said mobile station to a data transmission region that corresponds to the sector in which the mobile station is located, and, when the bandwidth required for the transmission of user data in said sector surpasses the communication bandwidth of the data transmission region, allocating to a data transmission region that corresponds to a sector other than said sector;
dividing, in the frequency axis direction, uplink burst intervals for transmitting user data of each mobile station provided in uplink subframes prescribed by orthogonal frequency division multiple access into a plurality of data reception regions corresponding in number to the number of sectors;
allocating regions for transmitting user data of each said mobile station to a data reception region that corresponds to said sector in which the mobile station is located, and, when the bandwidth required for transmission of user data in said sector surpasses the communication bandwidth of the data reception region, allocating to a data reception region that corresponds to a sector other than said sector.

6. The bandwidth control method according to claim 5, further comprising steps of:
further dividing said data transmission regions in the time axis direction according to said number of sectors, and switching allocated sectors at each symbol boundary of regions that have been divided in said time axis direction;
further dividing said data reception regions in the time axis direction according to said number of sectors and switching allocated sectors at each symbol boundary of regions that have been divided in said time axis direction.

7. The bandwidth control method according to claim 5 or 6, further comprising a step of:
when, after allocation of regions for transmitting user data of each said mobile station to said data reception regions, an empty region remains in said data reception regions, inserting dummy data that have been determined in advance in said empty region.
